# FASCICULE DE BREVET EUROPEEN

(11) **EP 1 034 952 B1**
(45) Date de publication et mention de la délivrance du brevet: **29.10.2003**
(21) Numéro de dépôt: 00400634.2
(22) Date de dépôt: 08.03.2000
(51) Int. Cl.: B60H 1/00

(54) **Procédé pour assembler un bloc de chauffage et/ou climatisation et une planche de bord, et ensemble**
Verfahren zum Zusammenbauen einer Heizung und/oder Klimaanlage mit einer Vorderfront sowie Vorrichtung dazu .
Procedure for assembling a heating -and/or an air conditioning module and a front panel, and the device

(30) Priorité: 10.03.1999 FR 9902949
(43) Date de publication de la demande: 13.09.2000
(73) Titulaire: Sai Automotive Allibert Industrie, 92000 Nanterre (FR)
(72) Inventeur: Belle, Pascal, 60530 Crouy-en-Thelle (FR)
(74) Mandataire: Lerner, François

(56) Documents cités:
- WO-A-97/22510
- FR-A- 2 623 776
- FR-A- 2 765 175
- US-A- 5 673 964

## Description

L'invention concerne un procédé pour assembler un bloc de chauffage et/ou climatisation et au moins une partie d'une planche de bord de véhicule, et un ensemble comprenant un bloc de chauffage et/ou climatisation et une partie au moins d'une planche de bord.

Lors de la conception d'un véhicule et en particulier d'une planche de bord, on cherche notamment à en augmenter la compacité et à réduire les coûts de réalisation. Pour ce faire, on se heurte notamment à des problèmes relatifs à la fixation d'éléments ou d'accessoires sur la planche de bord et ce dans une position relative satisfaisante.

Pour les résoudre, l'invention propose un procédé comprenant successivement les étapes suivantes :
a) réaliser un corps et un élément complémentaire de façade présentant chacun une surface d'aspect, et destinés à définir ensemble une partie au moins d'une planche de bord, le corps présentant une zone d'assemblage destinée à recevoir une zone de coopération (d'accostage) de la façade dans une position déterminée telle que la surface d'aspect de la façade complète la surface d'aspect du corps,
b) assembler la façade et le bloc de chauffage et/ou climatisation pour définir un module préassemblé,
c) positionner le module préassemblé par rapport au corps, jusqu'à amener dans la position déterminée la zone d'assemblage du corps et la zone de coopération de la façade,
d) fixer le module préassemblé sur le corps, dans ou à proximité de la zone d'assemblage du corps.

Cette solution facilite l'assemblage du bloc de chauffage et/ou climatisation et de la planche de bord, puisque l'assemblage de la façade sur le bloc de chauffage/climatisation est réalisé avant que l'un ou l'autre ne soit assemblé sur la planche de bord.

De plus, la fixation du module préassemblé dans ou à proximité de la zone d'assemblage du corps permet d'obtenir une faible dispersion dans l'assemblage. Par conséquent, le risque de défaut concernant l'accostage entre les deux surfaces d'aspects sera considérablement réduit.

En outre, la moindre dispersion facilite la fixation, puisque les moyens de fixation doivent ainsi être positionnés sensiblement toujours au même endroit.

De préférence, lors de l'étape c) précitée, on rapprochera le module préassemblé et le corps de la planche de bord par l'arrière dudit corps, c'est-à-dire du côté opposé à sa surface d'aspect. Avec une telle approche par l'arrière (côté non visible) de la planche de bord, on pourra ainsi si nécessaire camoufler la zone d'assemblage entre le corps de planche et sa façade déjà préassemblée avec le bloc de chauffage/climatisation.

Pour améliorer encore la fixation du module, l'invention propose avantageusement qu'après l'étape d), on fixe en outre le bloc de chauffage et/ou climatisation avec un élément de la structure du véhicule, telle que le châssis, ou le tablier, ou encore une traverse allongée structurelle couramment prévue pour la fixation et le renforcement mécanique des planches de bord.

Cette fixation complémentaire permet de fiabiliser la fixation du module tout en conservant un positionnement satisfaisant.

Pour faciliter cette fixation complémentaire, l'invention propose que l'on utilise des moyens de fixations ajustables suivant plusieurs directions distinctes pour fixer le bloc de chauffage et/ou climatisation sur la structure du véhicule.

Ainsi, on peut rattraper aisément les dispersions de cote pouvant exister dans la réalisation et dans l'assemblage du module, de la planche de bord ou de la structure du véhicule.

D'autre part, pour faciliter le positionnement du module préassemblé par rapport au corps dans la position déterminée, lors de l'étape c), l'invention propose l'on munisse le module préassemblé et le corps de moyens d'indexation complémentaires guidant la façade jusqu'à la position déterminée.

Selon une caractéristique avantageuse de l'invention, lors de l'étape b), on réalise la mise en place de moyens de commande et/ou de buses d'aération et/ou leur connexion au bloc de chauffage et/ou climatisation.

La mise en place desdits moyens de commande et/ou desdites buses d'aération est ainsi grandement facilitée.

L'invention a également pour objet un ensemble pour véhicule. Selon l'invention, il comprend :
- un bloc de chauffage et/ou climatisation d'un véhicule,
- un corps présentant une surface d'aspect et comportant une zone d'assemblage,
- une façade présentant une surface d'aspect et une zone de coopération destinée à coopérer avec la zone d'assemblage du corps dans une position relative déterminée telle que la surface d'aspect de la façade complète la surface d'aspect du corps,
- des moyens d'assemblage de la façade et du bloc de chauffage et/ou climatisation,
- des moyens de fixation comportant :
   - une première partie disposée sur le corps, dans ou à proximité de la zone d'assemblage,
   - une deuxième partie disposée sur la façade et/ou sur le bloc de chauffage et/ou climatisation,
   - une troisième partie reliant la première et la deuxième partie, afin de fixer la façade sur le corps dans la position déterminée et définir ainsi une partie au moins d'une planche de bord.

Cet ensemble présente les avantages présentés en relation avec le procédé.

De manière complémentaire, l'invention propose avantageusement que la deuxième partie des moyens de fixation soit disposée sur la façade, dans ou à proximité de la zone de coopération.

Ainsi, le positionnement relatif du module et du corps est encore amélioré, ce qui réduit le risque de défaut d'accostage entre eux. De plus, le positionnement relatif des premier et deuxième moyens de fixation est également amélioré, ce qui facilite leur utilisation.

L'invention va apparaître encore plus clairement dans la description qui va suivre, faite en référence aux dessins annexés dans lesquels :
- la figure 1 illustre en perpective éclatée un ensemble conforme à l'invention,
- la figure 2 est une vue en perspective à échelle agrandie suivant la flèche repérée II à la figure 1.

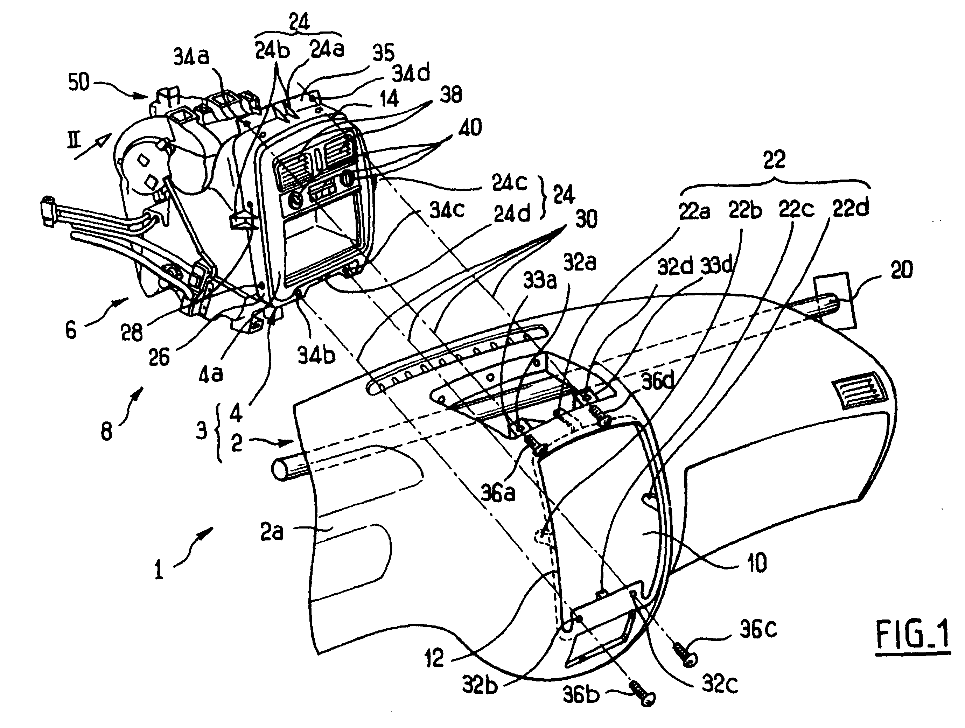

La figure 1 illustre un ensemble 1 comprenant en particulier une planche de bord 3 et un groupe d'alimentation en air de l'habitacle, ici un bloc de climatisation 6.

La planche de bord 3 est supportée par une traverse 20 et comprend un corps 2 et un élément complémentaire 4, formant façade. Le corps 2 et la façade 4 présentent chacun une surface avant d'aspect respectivement 2a, 4a destinée à être visible des occupants de la voiture, lorsque la planche de bord 3 sera en place dans un véhicule.

Le corps 2 comporte une ouverture 10 présentant ici une forme sensiblement rectangulaire, quasiment identique au pourtour de la surface d'aspect 4a de la façade, au jeu d'assemblage près. La façade 4 et plus précisément sa surface d'aspect 4a étant destinée à être reçue dans l'ouverture 10, l'ouverture est adapté de manière à correspondre au contour de la surface d'aspect 4a de la façade. Le corps 2 et la façade 4 présentent respectivement une zone d'assemblage 12 et une zone de coopération (d'accostage) 14 destinées à venir au contact l'une de l'autre.

La zone d'assemblage 12 constitue ici une surface sensiblement rectangulaire s'étendant en périphérie de l'ouverture 10, tout autour de ladite ouverture, du côté arrière de la planche de bord, opposé à la surface d'aspect 2a. La zone de coopération ou d'accostage 14 s'étend en périphérie de la surface d'aspect 4a, tout autour de celle-ci. Les surfaces d'assemblage 12 et de coopération 14 présentent sensiblement la même forme.

L'ensemble 1 comporte en outre des moyens d'indexation ou de guidage dont une première partie 22 portée par le corps 2, comporte ici quatre ergots légèrement biseautés 22a, 22b, 22c, 22d, disposés à proximité immédiate de chacun des côtés de la zone d'assemblage 12.

La façade comporte une deuxième partie 24 des moyens d'indexation, destinée à coopérer avec la première partie 22. Cette seconde partie 24 est disposée le long d'un rebord 26 de la façade 4, s'étendant vers l'arrière (vers le bloc de climatisation 6), sensiblement perpendiculairement à la surface de coopération 14. Ici, cette seconde partie 24 comprend quatre rainures 12a, 12b, 12c, 12d s'élevant vers l'arrière et munies d'une butée à leur extrémité arrière.

Les première 22 et deuxième parties 24 des moyens d'indexation s'étendent sensiblement perpendiculairement respectivement à la surface d'assemblage 12 et à la surface de coopération 14, de sorte que lorsqu'elles coopèrent entre elles, elles réduisent notablement les possibilités de mouvement relatif autre qu'une translation suivant une direction qui leur est perpendiculaire.

L'ensemble comprend en outre des moyens de fixation dont une première partie est portée par le corps 2 et comprennent ici quatre trous 32a, 32b, 32c, 32d réalisés pour certains 32b, 32c dans la surface d'assemblage 12 et pour d'autres 32a, 32d, sur des pattes 33a, 33d rapportées sur le corps à proximité de la surface d'assemblage 12.

La façade 4 comprend une deuxième partie des moyens de fixation destinée à coopérer avec la première partie et comprenant ici quatre trous 34a, 34b, 34c, 34d dont deux 34b, 34c sont réalisés dans la surface de coopération 14 et deux autres 34a, 34d à proximité de la surface de coopération 14, dans une patte 35 fixée sur le rebord 26.

L'ensemble 1 comprend d'autre part des moyens d'assemblage 28 de la façade sur le bloc de climatisation 6, ici des vis passant à travers le rebord 26 et vissées dans des trous taraudés ménagés dans le bloc de climatisation 6. Ainsi fixée, la façade 4 définit avec le bloc de climatisation 6 un module assemblé 8.

En outre, la façade 4 comprend des logements destinés à recevoir des buses d'aération 38 et des boutons de commande 40 du bloc de climatisation.

Pour réaliser l'assemblage du bloc de climatisation 6 sur la planche de bord 3, on place les aérateurs et les boutons de commande du bloc de climatisation sur la façade 4, on les connecte au bloc de climatisation 6 et on fixe la façade 4 sur le bloc de climatisation 6, à l'aide des moyens d'assemblage 28.

Ensuite, on rapproche l'un de l'autre le module préassemblé 8 et le corps 2 suivant une direction 30 sensiblement perpendiculaire à la surface d'assemblage 12, en vue d'insérer la surface d'aspect 4a de la façade 4 dans l'ouverture 10. Pour cela, on recommande que le module préassembé soit présenté en regard de la surface arrière du corps 2 opposé à la face d'aspect 2a. Lorsque les surfaces 12 et 14 sont à proximité l'une de l'autre, les première 22 et deuxième parties 24 des moyens d'indexation coopèrent entre eux pour guider la façade 4 dans son positionnement par rapport au corps 2 au cours de sa translation suivant la direction 30.

Ainsi, lorsque qu'en poursuivant l'approche de la façade 4 vers l'ouverture 10, les surfaces 12 et 14 arrivent en contact l'une de l'autre, elles sont d'office dans une position satisfaisante.

Par conséquent, les première 32 et deuxième parties 34 des moyens de fixation (orifices à faire coïncider) sont alors sensiblement en face l'une de l'autre et il est aisé de passer une troisième partie de ces moyens de fixation, ici des vis 36a, 36b, 36c, 36d, à travers chacune de ces parties (orifices de fixation, en l'espèce) pour les relier ensemble et fixer ainsi le module préassemblé 8 au corps 2.

La surface d'aspect 4a de la façade 4 est alors disposée à la place de l'ouverture 10, sensiblement dans le prolongement de la surface d'aspect 2a qu'elle vient compléter.

L'accès aux pattes de fixation 33a, 33d pour mettre en place les vis 36a, 36d est facilité par un évidement 42 réalisé dans le corps 2. L'évidement, les pattes de fixation 33a, 33d et les vis 36a, 36d devront toutefois être dissimulés. Pour ce faire, on pourra avantageusement les recouvrir d'un obturateur ou d'un accessoire, tel qu'un afficheur d'ordinateur de bord ou d'aide à la navigation venant se loger dans cet évidement 42.

De la même manière, on pourra recouvrir les vis 36b et 36c d'un cache fixé dessus ou d'un accessoire tel qu'un cendrier.

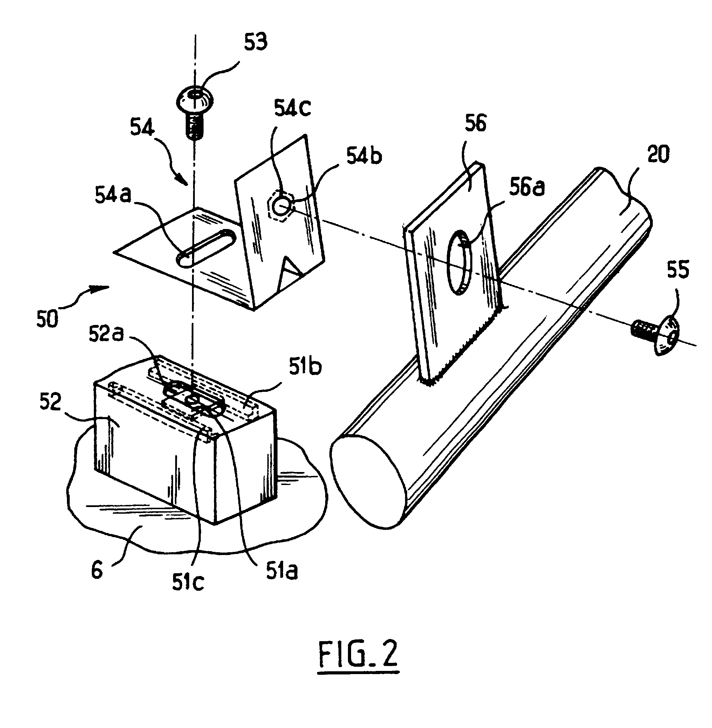

L'ensemble 1 comprend de plus des moyens de fixation complémentaire 50 du module 8, plus particulièrement illustrés à la figure 2.

Ces moyens de fixation complémentaire 50 comprennent un plot 52, une équerre métallique 54 et une plaque métallique 56 soudée sur la traverse métallique 20 du véhicule et deux vis 53, 55.

Le plot 52 présente un trou oblong 52a, sous lequel un écrou 51a coulisse, maintenu le long de deux rainures 51b, 51c. L'équerre 52 présente sur un côté un trou oblong 54a et sur l'autre côté un écrou 54c soudé derrière un trou 54b. La plaque 56 présente un trou oblong 56a.

Les trois trous oblongs 52a, 54a, 56a s'étendent suivant trois directions perpendiculaires. Ils constituent des glissières pour les boulons formées d'une part par l'écrou 51a et la vis 53 et d'autre part par l'écrou 54 et la vis 55. Ainsi, les moyens de fixation complémentaire 50 permettent de corriger aisément les écarts de positionnement relatifs entre le bloc de climatisation 6 et la traverse 20 pouvant apparaître d'un ensemble à l'autre.

Pour fixer le bloc de climatisation on fait passer la tige de la vis 55 à travers le trou 56a et on la visse dans l'écrou 54c. De même, on fait passer la tige de la vis 53 dans le trou 54a et on la visse dans l'écrou 51a. Puis, on bloque chacune des vis 53, 55.

Le bloc de climatisation 6 ainsi fixé sur la planche de bord 3, on fixera ultérieurement la traverse 20 sur le véhicule.

Bien entendu, l'invention n'est nullement limitée aux réalisations qui viennent d'être décrites.

Ainsi, on pourrait prévoir de recouvrir une partie au moins de la surface d'aspect de la façade, après fixation sur le corps sans sortir de l'objet de la présente invention, dans la mesure où un écart de positionnement par rapport au corps sera préjudiciable.

On pourrait également prévoir à la place d'une fixation de la façade sur le bloc de climatisation, un simple assemblage destiné à la maintenir en place, mais incapable de résister à un effort important.

## Revendications

1. Procédé pour assembler un bloc de chauffage et/ou climatisation (6) et au moins une partie d'une planche de bord (3) de véhicule, comprenant successivement les étapes suivantes :
a) réaliser un corps (2) et un élément complémentaire de façade (4) de planche de bord présentant chacun une surface d'aspect (2a, 4a), et destinés à définir ensemble une partie au moins d'une planche de bord, le corps présentant une zone d'assemblage (12) destinée à recevoir une zone de coopération (14) de la façade dans une position déterminée telle que la surface d'aspect de la façade complète la surface d'aspect du corps,
b) assembler la façade et le bloc de chauffage et/ou climatisation pour définir un module préassemblé (8),
c) positionner l'un par rapport à l'autre le module préassemblé et le corps, jusqu'à amener dans la position déterminée la zone d'assemblage du corps et la zone de coopération de la façade,
d) fixer le module préassemblé (8) au corps (2), dans ou à proximité de la zone d'assemblage (12) du corps.

2. Procédé selon la revendication 1, **caractérisé en ce qu'**après l'étape d), on fixe en outre le bloc de chauffage et/ou climatisation à la structure du véhicule (20).

3. Procédé selon la revendication 2, **caractérisé en ce qu'**on utilise des moyens de fixations ajustables (51a, 51b, 51c, 52, 52a, 53, 54, 54a, 54b, 54b, 54c, 55, 56, 56a) suivant plusieurs directions distinctes pour fixer le bloc de chauffage et/ou climatisation sur la structure du véhicule.

4. Procédé selon l'une quelconque des revendications précédentes, **caractérisé en ce que** lors de l'étape c), on rapproche le module préassemblé (8) et le corps (2) de la planche de bord par l'arrière dudit corps (2), du côté opposé à sa surface d'aspect (2a).

5. Procédé selon l'une quelconque des revendications précédentes, **caractérisé en ce que** l'on munit le module préassemblé et le corps de moyens d'indexation (22, 24) complémentaires guidant la façade jusqu'à la position déterminée.

6. Procédé selon l'une quelconque des revendications précédentes, **caractérisé en ce que** lors de l'étape b), on réalise la mise en place de moyens de commande (40) et/ou de buses d'aération (38) et/ou leur connexion au bloc de chauffage et/ou climatisation.

7. Ensemble (1) pour véhicule comprenant :
- un bloc de chauffage et/ou climatisation (6) d'un véhicule,
- un corps (2) de planche de bord présentant une surface d'aspect (2a) et comportant une zone d'assemblage (12),
- une façade (4) de planche de bord présentant une surface d'aspect (4a) et une zone de coopération (14) destinée à coopérer avec la zone d'assemblage du corps dans une position relative déterminée telle que la surface d'aspect de la façade complète la surface d'aspect du corps,
- des moyens d'assemblage (28) entre la façade et le bloc de chauffage et/ou climatisation,
- des moyens de fixation comportant :
- une première partie (32a, 32b, 32c, 32d) prévue sur le corps, dans ou à proximité de la zone de d'assemblage (12),
- une deuxième partie (34a, 34b, 34c, 34d) prévue sur la façade et/ou sur le bloc de chauffage et/ou climatisation,
- une troisième partie (36a, 36b, 36c, 36d) reliant la première et la deuxième parties, afin de fixer la façade au corps dans la position déterminée et définir ainsi une partie au moins d'une planche de bord.

8. Ensemble selon la revendication 7, **caractérisé en ce que** la deuxième partie des moyens de fixation (34a, 34b, 34c, 34d) est prévue sur la façade, dans ou à proximité de la zone de coopération (14).

9. Ensemble selon la revendication 7 ou 8, **caractérisé en ce qu'**elle comporte en outre des moyens de fixation ajustables (51a, 51b, 51c, 52, 52a, 53, 54, 54a, 54b, 54b, 54c, 55, 56, 56a) du bloc de chauffage et/ou climatisation sur la structure (20) du véhicule.

10. Ensemble selon la revendication 9, **caractérisé en ce que** ladite structure (20) du véhicule est une traverse structurelle allongée adaptée pour s'étendre transversalement à l'arrière de la planche de bord.

11. Ensemble selon la revendication 9 ou 10, **caractérisé en ce que** les moyens de fixation du bloc de chauffage et/ou climatisation sur la structure du véhicule comportent des glissières (52a, 54a, 56a) et au moins une équerre (54).

12. Ensemble selon l'une quelconque des revendications 7 à 11, **caractérisé en ce que** la zone de coopération (14) de la façade est située en périphérie de la surface d'aspect (4a) de ladite façade.

13. Ensemble selon l'une quelconque des revendications 7 à 12, **caractérisé en ce qu'**elle comporte en outre des moyens d'indexation (22, 24) comportant une partie (22) disposée sur le corps et une partie (24) disposée sur la façade et/ou sur le bloc de chauffage et/ou climatisation, ces deux parties coopérant entre elles, à proximité de la position déterminée.

14. Ensemble selon l'une quelconque des revendications 7 à 13, **caractérisé en ce que** la zone d'assemblage du corps de planche de bord est située sur la surface arrière, laquelle est opposée à la surface d'aspect (2a ) de ce corps qui est, elle, frontale.

## Patentansprüche

1. Verfahren zur Montage eines Heiz- und/oder Klimatisierungsblocks (6) und zumindest eines Teils eines Armaturenbretts (3) für ein Fahrzeug mit folgenden aufeinanderfolgenden Schritten:
a) Herstellen eines Körpers (2) und eines komplementären Fassadenelements (4) für ein Armaturenbrett, die jeweils eine Sichtfläche (2a, 4a) aufweisen und dazu bestimmt sind, zusammen einen Teil zumindest eines Armaturenbretts zu bilden, wobei der Körper einen Montagebreich (12) aufweist, der einen Kontaktbereich (14) der Fassade in einer vorbestimmten Position aufnehmen soll, so dass die Sichtfläche der Fassade die Sichtfläche des Körpers ergänzt,
b) Zusammenbau der Fassade und des Heiz- und/oder Klimatisierungsblocks, um ein vormontiertes Modul (8) zu bilden,
c) Positionieren des vormontierten Moduls (8) und des Körpers relativ zueinander, bis der Montagebereich des Körpers und der Kontaktbereich der Fassade in die vorbestimmte Position gebracht sind,
d) Befestigen des vormontierten Moduls (8) am Körper (2) in oder nahe am Montagebereich (12) des Körpers.

2. Verfahren nach Anspruch 1, **dadurch gekennzeichnet, dass** bei Schritt d) außerdem der Heiz- und/oder Klimatisierungsblock am Aufbau des Fahrzeugs (20) befestigt wird.

3. Verfahren nach Anspruch 2, **dadurch gekennzeichnet, dass** Befestigungsmittel (51a, 51b, 51c, 52, 52a, 53, 54, 54a, 54b, 54c, 55, 56, 56a) verwendet werden, die entlang mehrerer verschiedener Richtungen einstellbar sind, um den Heiz- und/oder Klimatisierungsblock am Aufbau des Fahrzeugs zu befestigen.

4. Verfahren nach einem der vorhergehenden Ansprüche, **dadurch gekennzeichnet, dass** bei Schritt c) das vormontierte Modul (8) und der Körper (2) des Armaturenbretts einander über die Rückseite des Körpers (2) auf der Seite, die seiner Sichtfläche (2a) gegeüberliegt, angenähert werden.

5. Verfahren nach einem der vorhergehenden Ansprüche, **dadurch gekennzeichnet, dass** man das vormontierte Modul und den Körper mit komplementären Indexmitteln (22, 24) versieht, die die Fassade in die vorbestimmte Position führen.

6. Verfahren nach einem der vorhergehenden Ansprüche, **dadurch gekennzeichnet, dass** bei Schritt b) die Platzierung von Bedienungsmitteln (40) und/oder Belüftungsdüsen (38) und/oder ihre Verbindung mit dem Heiz- und/oder Klimatisierungsblock durchgeführt wird.

7. Einheit (1) für eine Fahrzeug mit:
- einem Heiz- und/oder Klimatisierungsblock (6) für ein Fahrzeug,
- einem Körper (2) für ein Armaturenbrett mit einer Sichtfläche (2a) und einem Montagebereich (12),
- einer Fassade (4) für ein Armaturenbrett mit einer Sichtfläche (4a) und einem Kontaktbereich (14), der mit dem Montagebereich (12) des Körpers in einer vorbestimmten Position zusammenwirken soll, so dass die Sichtfläche der Fassade die Sichtfläche des Körpers ergänzt,
- Mittel (28) zum Zusammenbau der Fassade und des Heiz- und/oder Klimatisierungsblocks,
- Befestigungsmitteln mit:
- einem ersten Teil (32a, 32b, 32c, 32d), der auf dem Körper in oder nahe am Montagebereich (12) vorgesehen ist,
- einem zweite Teil (34a, 34b, 34c, 34d), der auf der Fassade und/oder dem Heiz- und/oder Klimatisierungsblock vorgesehen ist,
- einem dritten Teil (36a, 36b, 36c, 36d), der den ersten und den zweiten Teil verbindet, um die Fassade an dem Körper in der vorbestimmten Position zu befestigen und so zumindest einen Teil eines Armaturenbrett zu definieren.

8. Einheit nach Anspruch 7, **dadurch gekennzeichnet, dass** der zweite Teil der Befestigungsmittel (34a, 34b, 34c, 34d) auf der Fassade in oder nahe am Kontaktbereich (14) vorgesehen ist.

9. Einheit nach Anspruch 7 oder 8, **dadurch gekennzeichnet, dass** sie einstellbare Befestigungsmittel (51a, 51b, 51c, 52, 52a, 53, 54, 54a, 54b, 54c, 55, 56, 56a) für den Heiz- und/oder Klimatisierungsblock an dem Aufbau (20) des Fahrzeugs umfasst.

10. Einheit nach Anspruch 9, **dadurch gekennzeichnet, dass** der Aufbau (20) des Fahrzeugs ein länglicher Strukturquerträger ist, der da für ausgelegt ist, sich von dem Armaturenbrett transversal nach hinten zu erstrecken.

11. Einheit nach Anspruch 9 oder 10, **dadurch gekennzeichnet, dass** die Befestigungsmittel für den Heiz- und/oder Klimatisierungsblock an dem Aufbau (20) des Fahrzeugs Gleitschienen (52a, 54a, 56a) und zumindest ein Winkeleisen (54) umfassen.

12. Einheit nach einem der Ansprüche 7 bis 11, **dadurch gekennzeichnet, dass** Kontaktbereich (14) der Fassade an der Peripherie der Sichtfläche (4a) der Fassade liegt.

13. Einheit nach einem der Ansprüche 7 bis 12, **dadurch gekennzeichnet, dass** sie außerdem Indexmittel (22, 24) umfasst, die einen Teil (22) umfassen, der auf dem Körper angeordnet ist, und einen Teil (24), derauf der Fassade und/oder dem des Heiz- und/oder Klimatisierungsblock angeordnet ist, wobei diese zwei Teile in der Nähe der vorbestimmten Position miteinander zusammenwirken.

14. Einheit nach einem der Ansprüche 7 bis 13, **dadurch gekennzeichnet, dass** der Montagebereich (12) des Armaturenbrettkörpers auf der rückseitigen Fläche liegt, die der Sichtfläche (2a) dieses Körpers gegenüberliegt, die ihrerseits frontal liegt.

## Claims

1. Method for assembling a heating and/or air conditioning unit (6) and at least one portion of a dashboard (3) of a vehicle, comprising, in succession, the following steps:
a) producing a body (2) and a complementary facade element (4) of a dashboard, which each have a show surface (2a, 4a) and which are together to define at least one portion of a dashboard, the body having an assembly region (12) which is to receive a co-operation region (14) of the facade in a predetermined position such that the show surface of the facade completes the show surface of the body,
b) assembling the facade and the heating and/or air-conditioning unit to define a pre-assembled module (8),
c) positioning the pre-assembled module and the body relative to one another until the assembly region of the body and the co-operation region of the facade are brought into the predetermined position,
d) securing the pre-assembled module (8) to the body (2), in or near the assembly region (12) of the body.

2. Method according to claim 1, **characterised in that**, after step d), the heating and/or air-conditioning unit is also secured to the structure (20) of the vehicle.

3. Method according to claim 2, **characterised in that** securing means (51a, 51b, 51c, 52, 52a, 53, 54, 54a, 54b, 54b, 54c, 55, 56, 56a) which can be adjusted in several distinct directions are used to secure the heating and/or air-conditioning unit to the structure of the vehicle.

4. Method according to any one of the preceding claims, **characterised in that**, during step c), the pre-assembled module (8) and the body (2) of the dashboard are brought close together by way of the rear of the body (2), on the side remote from its show surface (2a).

5. Method according to any one of the preceding claims, **characterised in that** the pre-assembled module and the body are provided with complementary indexing means (22, 24) guiding the facade into the predetermined position.

6. Method according to any one of the preceding claims, **characterised in that**, during step b), control means (40) and/or ventilation nozzles (38) are put in place and/or they are connected to the heating and/or air-conditioning unit.

7. Assembly (1) for a vehicle comprising:
- a heating and/or air-conditioning unit (6) of a vehicle,
- a dashboard body (2) having a show surface (2a) and comprising an assembly region (12),
- a dashboard facade (4) having a show surface (4a) and a co-operation region (14) which is to co-operate with the assembly region of the body in a predetermined relative position such that the show surface of the facade completes the show surface of the body,
- assembly means (28) between the facade and the heating and/or air-conditioning unit,
- securing means comprising:
- a first portion (32a, 32b, 32c, 32d) provided on the body, in or near the assembly region (12),
- a second portion (34a, 34b, 34c, 34d) provided on the facade and/or on the heating and/or air-conditioning unit,
- a third portion (36a, 36b, 36c, 36d) connecting the first and second portions in order to secure the facade to the body in the predetermined position and thus to define at least one portion of a dashboard.

8. Assembly according to claim 7, **characterised in that** the second portion (34a, 34b, 34c, 34d) of the securing means is provided on the facade, in or near the co-operation region (14).

9. Assembly according to claim 7 or 8, **characterised in that** it also comprises adjustable securing means (51a, 51b, 51c, 52, 52a, 53, 54, 54a, 54b, 54b, 54c, 55, 56, 56a) for securing the heating and/or air-conditioning unit to the structure (20) of the vehicle.

10. Assembly according to claim 9, **characterised in that** the structure (20) of the vehicle is an elongate structural cross-member suitable for extending transversely at the rear of the dashboard.

11. Assembly according to claim 9 or 10, **characterised in that** the means for securing the heating and/or air-conditioning unit to the structure of the vehicle comprise slides (52a, 54a, 56a) and at least one angled member (54).

12. Assembly according to any one of claims 7 to 11, **characterised in that** the co-operation region (14) of the facade is located at the periphery of the show surface (4a) of the said facade.

13. Assembly according to any one of claims 7 to 12, **characterised in that** it also comprises indexing means (22, 24) comprising a portion (22) disposed on the body and a portion (24) disposed on the facade and/or on the heating and/or air-conditioning unit, those two portions cooperating with one another, in the vicinity of the predetermined position.

14. Assembly according to any one of claims 7 to 13, **characterised in that** the assembly region of the dashboard body is located on the rear surface, which is remote from the show surface (2a) of that body, the latter surface being for its part at the front.
